# EUROPÄISCHE PATENTANMELDUNG

(11) **EP 1 150 027 A1**
(43) Veröffentlichungstag der Anmeldung: **31.10.2001**
(21) Anmeldenummer: 00109012.5
(22) Anmeldetag: 26.04.2000
(51) Int. Cl.: F16D 13/64

(54) **Kupplungsscheibe für schaltbare Reibkupplungen**

(71) Anmelder: Raybestos Industrie-Produkte GmbH, 54497 Morbach (DE)
(72) Erfinder: Tscheplak, Thomas, 71384 Weinstadt (DE); Schulz, Norbert, 51709 Marienheide (DE)
(74) Vertreter: Gille Hrabal Struck Neidlein Prop Roos

(57) **Zusammenfassung**

Die Kupplungsscheibe 1 für - sowohl trocken laufende oder auch naß laufende - Reibkupplungen mit aufeinander drückbaren Reibbelägen aus Reibmaterial, wobei wenigstens ein Belagring oder wenigstens ein Reibbelagträger 11 mit aufgebrachtem Reibbelag 18 bzw. zwei gegenseitig verriegel- oder verklemmbare Belagringe oder Reibbelagträger mit aufgebrachten Reibbelägen mittels einer Führung 15, 20 axial verschiebbar mit einem Kupplungsscheibengrundkörper 7 formschlüssig und drehfest mit diesem verbunden angeordnet ist oder sind, ist dadurch gekennzeichnet, dass die Führung 15, 20 außerhalb des oder der Belagringe oder außerhalb des oder der Reibbelagträger 11 vorgesehen ist. Daher kann die Führung weiter entfernt von der Rotationsachse erfolgen, als bei herkömmlichen bekannten Kupplungsscheiben, die auf dem Grundkörper verschiebbar angeordnet sind. Dadurch sind bei gleichem übertragenem Drehmoment die zum Schalten der Kupplung notwendigen aufzubringenen Verschiebekräfte geringer, wodurch der Wirkungsgrad der Kupplung erhöht wird

## Beschreibung

Die Erfindung betrifft eine Kupplungsscheibe für - sowohl trocken laufende oder auch naß laufende - Reibkupplungen, wie sie zum Beispiel in Kraftfahrzeugen zwischen Motor und Handschaltgetriebe als Drehzahlwandler oder Drehmomentunterbrecher eingesetzt werden.

Gängige Kupplungen weisen Kupplungsscheiben auf, bei denen beim Ein- und Auskuppeln immer die gesamte Masse der kompletten Kupplungsscheibe auf der Getriebeeingangswelle verschoben werden muß, wobei die von der Kupplungsdruckplatte eingeleitete oder auch aufgehobene Kraft nur über radiale Umlenkung durch den Torsionsdämpfer erfolgt oder die starre durchgehende Scheibe (beim Zweimassenschwungrad) an der Kupplungsscheibennabe die gewünschte Verschiebewirkung hervorruft.

Aus EP 98 115 876 ist dagegen eine Kupplungsscheibe bekannt, die zweigeteilt ist. Sie besteht aus einem Grundkörper, der auf der Getriebewelle festgesetzt ist und beim Aus- oder Einkuppelvorgang nicht axial bewegt wird. Auf diesen Grundkörper sind Reibbelagringe aufgeschoben, die beim Betätigen der Schaltkupplung axial auf dem Umfang des Grundkörpers verschoben werden, wodurch sich die beim Schalten zu bewegende Masse deutlich verringert. Bei der bekannten Kupplungsscheibe verringert sich die zum Verschieben beim Schaltvorgang notwendige Reibarbeit in der Führung mit zunehmender Entfernung der Führung von der Drehachse des Grundkörpers, da die vom Grundkörper auf den Reibbelagring übertragene Kraft bei gleichbleibendem Drehmoment mit zunehmendem Hebel abnimmt. Es sind daher Wirkungsgrade von ca. 95% erreichbar.

Der Erfindung liegt die Aufgabe zugrunde, den Wirkungsgrad von bekannten Kupplungsscheiben weiter zu verbessern

Diese Aufgabe wird erfindungsgemäß mit einer Kupplungsscheibenkonstruktion gelöst, welche die Merkmale des Patentanspruches 1 aufweist. Vorteilhafte Ausgestaltungen und Weiterbildungen dieser Kupplungsscheibenkonstruktion sind Gegenstand der Unteransprüche.

Die Führung des Reibbelagrings bzw. Reibbelagträgers oder der Segmente derselben erfolgt von Außen, so dass die Führung weiter von der Rotationsachse erfolgen kann, als dieses bei herkömmlichen bekannten Kupplungsscheiben erfolgen kann, die auf dem Grundkörper verschiebbar angeordnet sind. Dadurch sind bei gleichem übertragenem Drehmoment die zum Schalten der Kupplung notwendigen aufzubringenen Verschiebekräfte geringer, wodurch der Wirkungsgrad der Kupplung erhöht wird und zwar bis auf 97% im Vergleich zu ca. 85% bei herkömmlichen und 95% bei bekannten Kupplungsscheiben.

Vorzugsweise sind bei der Kupplungsscheibe mehrere Belagringe bzw. Reibbelagträgerringe vorgesehen, die derart ineinander eingepasst sind, dass diese teleskopartig beim Schalten der Kupplung nacheinander in Eingriff kommen, wodurch der Momentenverlauf reibwertunabhängig gesteuert werden kann. So wird ein gleichmäßigeres Anpressen der Reibflächen gegeneinander erreicht.

Das mit Verriegelungslaschen ausgerüstete Reibbelagpaar oder Reibbelagträgerpaar ist vorzugsweise so konzipiert, dass die dazwischenliegenden Kupplungsbelagfedern beim Verriegeln der Beläge oder der Belagträger leicht vorgespannt werden. Damit wird erreicht, dass die Belag- oder mit Belägen beklebte Belagträgereinheit im verriegelten Zustand zugleich beidseitig plangeschliffen und bis zum Einbau im Kupplungsaggregat als Einheit erhalten und transportiert werden kann.

Die Kupplungsbelagfedern sind beispielsweise elastische Schläuche oder Profilstreifen oder Segmente aus temperaturstabilem Kunststoff, wie zum Beispiel Silikon oder metallische Biegeblatt- beziehungsweise Torsionsfedern. Auch sogenannte asymmetrische Federkissen aus z. B. Stahl können eingesetzt werden, ohne dass diese sich negativ auf die sogenannte Berstfestigkeit der Paarungseinheit auswirken würden.

Werden statt der Reibbeläge mit Verriegelungslaschen Belagträger (mit entsprechendem Verriegelungssystem), auf denen Reibbeläge aufgeklebt sind, verwendet, bestehen die Reibbelagträger zweckmäßig aus Leichtmetall, Kunststoff oder armiertem Kunststoff, um die zu verschiebende Masse und deren axiales Massenträgheitsmoment so klein wie möglich zu halten.

Die Reibbeläge mit Verriegelungslaschen oder die Reibbelagträger mit Verriegelungslaschen, auf die Reibbeläge aufgeklebt sind, sind vorzugsweise so konstruiert, dass sich diese Teile selbst gegenseitig verriegeln. Im praktischen Betrieb läßt sich somit die Verriegelung nicht lösen, da dies durch die Gleitstege am KupplungsscheibenGrundkörper verhindert wird.

Die Kupplungsbeläge oder Kupplungsbelagträgereinheit (Träger mit Reibbelag) können auch so gestaltet sein, dass die Belagfedern durch kein Drehmoment belastet werden, um sie so werkstoff- und funktionsmäßig optimieren zu können.

Die erfindungsgemäße Kupplungsscheibe für schaltbare Reibkupplungen ist besonders für den Einsatz in Kupplungen mit geringem Abhub beziehungsweise Lüftspiel, d. h. in sogenannten Low-lift-Kupplungen, geeignet, weil durch das Verriegeln ein Verzug der Paarungseinheit minimiert wird. Außerdem erlaubt diese Konstruktion durch das Überschleifen der Paarung im verriegelten Zustand das Einhalten von so engen Dickentoleranzen und geringen Unwuchten, wie sie bei herkömmlichen Kupplungsscheiben technisch nicht realisierbar sind.

Wenn die Reibbeläge auf verriegelbare Reibbelagträger aufgeklebt sind, benötigen die Reibmaterialien keine teuren Armierungskomponenten wie Garne, Drähte usw. Sind die Belagträger aus Leichtmetall gefertigt, ist eine nahezu temperaturunabhängige Schleuderfestigkeit der Belagträger und der darauf angebrachten Reibbeläge möglich.

Andererseits erlaubt die erfindungsgemäße Kupplungsscheibe einen schnellen Belagwechsel, da nur das zu einer Einheit verriegelte Reibbelagpaar beziehungsweise verriegelte Belagträgerpaar mit aufgeklebten Belägen oder deren Segmente ausgetauscht werden braucht.

Der Einsatz von mit Belägen beklebten Belagträgern ist auch von Seiten der Recycle-Fähigkeit sehr interessant. Die Träger können immer wieder neu mit Reibbelägen beklebt werden. Die Belagträger müssen daher nicht entsorgt werden.

Erfindungsgemäß werden also sowohl für trocken als auch für naß laufende Schaltkupplungen ringscheibenförmige Träger für Reibbeläge oder auch komplette Reibbeläge in Form der Träger vorgeschlagen, welche axial verschiebbar und miteinander zu verriegeln sind.

In der Zeichnung sind zur weiteren Erläuterung der Erfindung zwei Ausführungsbeispiele einer erfindungsgemäßen Kupplungsscheibe für trocken oder auch naß laufende Schaltkupplungen schematisch dargestellt, und zwar zeigt
- Fig. 1a: eine schaubildliche Explosionsdarstellung der Kupplungsscheibe nach einer ersten Ausführungsform, wobei die beiden im Betrieb drehfest miteinander verbundenen, jedoch axial zueinander verschiebbaren Baugruppen getrennt dargestellt sind,
- Fig. 1b: eine schaubildliche Explosionsdarstellung der Kupplungsscheibe nach einer zweiten Ausführungsform, wobei die beiden im Betrieb drehfest miteinander verbundenen, jedoch axial zueinander verschiebbaren Baugruppen getrennt dargestellt sind,
- Fig. 2: einen Schnitt durch den Reibbelagträger mit aufgebrachtem Reibbelag gemäß einer zweiten Ausführungsform in vergrößertem Maßstab,
- Fig. 3: eine schaubildliche Ansicht einer Ausführungsform für eine Klemmhülse und eine Klemmspange für die Kupplungsscheibe nach Fig. 1 und
- Fig. 4: eine schaubildliche Ansicht einer zweiten Ausführungsform einer Klemmspange und einer Klemmhülse für die Kupplungsscheibe nach Fig. 1.

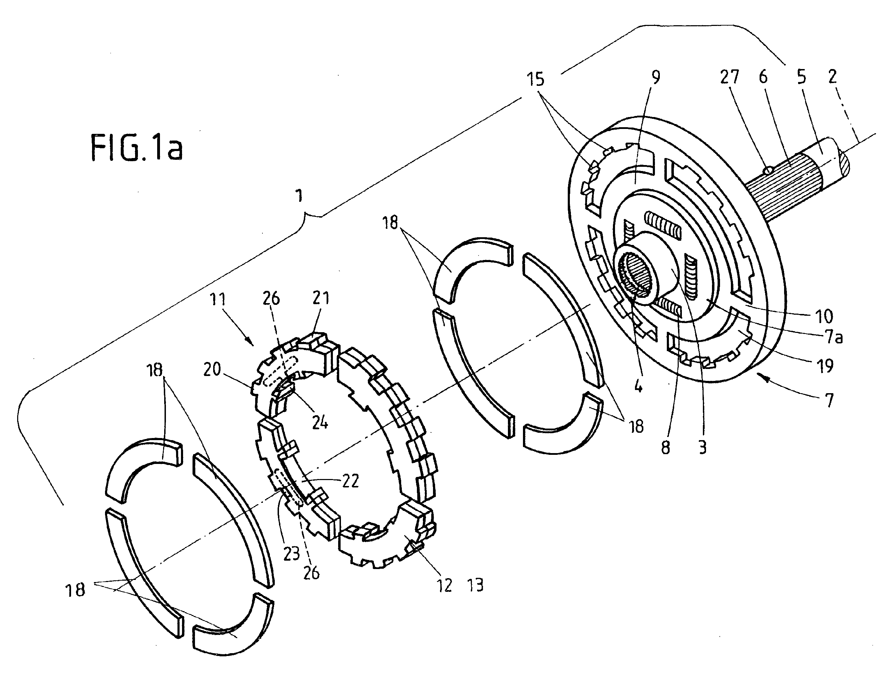

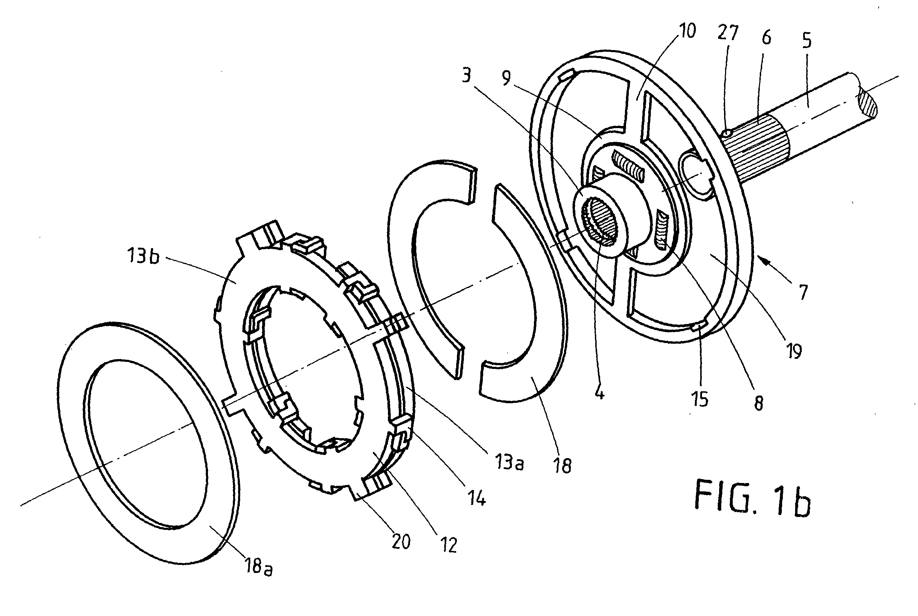

Die in Fig. 1 a dargestellte Kupplungsscheibe 1 besteht im wesentlichen aus zwei koaxial zueinander angeordneten und in Richtung einer Achse 2 gegeneinander verschiebbaren Baugruppen, die nachstehend näher beschrieben sind.

Der den Grundkörper 7 bildende eine Teil der Kupplungsscheibe 1 weist eine Nabe 3 mit Innenverzahnung 4 auf, welche auf einer zu einem nicht dargestellten Getriebe führenden Welle 5 mit entsprechender Außenverzahnung 6 drehfest und axial durch einen Einrastmechanismus arretiert, zum Beispiel durch eine in der Welle 5 federnd gelagerte Kugel 27 und eine in der Nabe 3 angeordnete Nut, angeordnet ist. Auf der Nabe 3 ist ein Druckfedern 8 enthaltender Torsionsdämpfer 7a angebracht. Der Torsionsdämpfer 7a weist eine Scheibe 9 auf, die am entlang des Umfangs verteilt vier kreissegmantartige Durchbrüche 19 aufweist, die von radial verlaufenden Stegen 10 in Drehrichtung begrenzt werden. Die Durchbrüche 19 sind an ihrem Außenumfang abschnittsweise mit radial verlaufenden zungenartigen Ausnehmungen 15 versehen, die als Verankerungs-, Führungs- und Verschiebelement für die die zweite Baugruppe der die Kupplungsscheibe 1 bildenden Reibbelagträger 11 dienen, welche nachstehend im einzelnen beschrieben sind.

Der in Fig. 1a gezeigte Reibbelagträger 11 besteht aus vier, nicht untereinander verbundenen kreissegmentartigen Abschnitten, die bei richtiger Anordnung in den Durchbrüchen 19 des Grundkörpers 7 einen unterbrochenen Ring bilden. Jedes Segment 11 besteht aus zwei Ringscheibensegmenten 12 und 13, welche in ihrer Ausführung identisch ausgebildet und spiegelbildlich zueinander angeordnet sind. Es sind aber ebenso zwei, drei oder eine andere zweckmäßige Anzahl von Segmenten denkbar.

Fig. 1b zeigt dagegen eine zweiteAusführungsform, bei der die zweite Baugruppe aus einer durchgehenden Ringscheibe 12 und zwei ungefähr halbkreisförmigen Ringscheibensegmenten 13a, 13b, die an dem Träger 12 anliegen, zusammengesetzt ist. Die Ringscheibensegmente 13a, 13b sind derart in die beiden Ausnehmungen 19 des Grundkörpers 7 eingepasst und weisen eine solche Dicke auf, die eine axiale Verschiebbarkeit - bei vorhandener Führung - des gesamten Reibelements 12, 13a, 13b um den erforderlichen Wert von. ca. 0.5 - 1 mm gewährleistet ist. Die Ringscheibe, bzw. die Ringscheibensegmentelemente tragen entsprechende Reibbeläge 18, 18a. Es ist aber nicht zwingend erforderlich, dass diese genau den Ringscheiben entsprechen, so kann z. B. die Ringscheibe 12 entweder von einem Belagring 18a oder von einer Anzahl von Belagringsegmenten 18 bedeckt sein, wenn dies beispielsweise fertigungstechnisch Vorteile mit sich bringt. Das Vorsehen von genau zwei Reibscheibensegmenten ist nicht erfindungswesentlich, eine andere Aufteilung erzielt die gleiche Wirkung.

Nicht auf das zweite Ausführungsbeispiel beschränkt und daher beispielhaft gezeigt, wird in Fig. 1b die Vorsehung von Verriegelungselementen 14. Die Ringscheibensegmente 12 und 13a, 13b sind am Außenumfang und am Innenumfang mit hakenförmig ausgebildeten Verriegelungselementen 14 versehen, welche durch relatives Verdrehen der aufeinandergelegten Ringscheibensegmente 12 und 13a, 13b ineinandergreifen. Außerdem enthalten die Ringscheibensegmente 12 und 13a, 13b am Außenumfang Zungen 20, welche in der in Fig. 1 gezeigten Montageposition miteinander fluchten, so dass der zusammengesetzte Reibbelagträger 11 in den entsprechenden Durchbruch 19 des Grundkörpers 7 eingeschoben werden kann, wobei die Zungen 20 des Reibbelagträgers 11 in die Ausnehmungen 15 im Durchbruch 19 der Scheibe 9 des Torsionsdämpfers 8 mit Gleit- oder Schiebesitz passen, so dass im Betrieb beim Lüften und beim Eindrücken der Kupplung der Reibbelagträger 11 gegenüber dem Grundkörper 7 axial verschoben werden können und der Grundkörper 7 mit der Nabe 3 stets in seiner Montageposition auf der Welle 5 verbleibt.

Da der Durchbruch 19 in axialer Richtung eine Dicke aufweist, die ausreicht, damit bei der betriebsbedingten axialen Verschiebung der Reibbelagträgersegmente 11 beide Ringscheibensegmente 12 und 13 (im ersten Ausführungsbeispiel, Fig. 1a), bzw. die Ringscheibensegmente 13a und 13b (im zweiten Ausführungsbeispiel, Fig. 1b) stets im Bereich der Wandung des Durchbruchs 19 bleiben und somit geführt sind, ist im Betrieb ein Verdrehen der Ringscheibensegmente relativ zueinander und damit ein Entriegeln nicht zu befürchten, da nicht möglich.

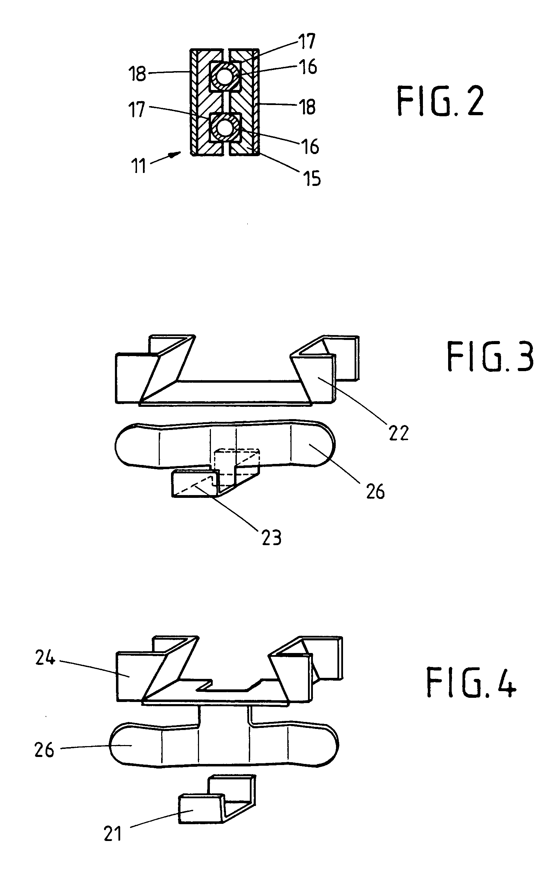

Bei den in Fig. 1a, 1b und 2 dargestellten Ausführungsformen der Kupplungsscheibe 1 ist auf die Außenseite der Ringscheibensegmente 12 und 13 jeweils ein Reibbelagschichtsegment 18 (im ersten Ausführungsbeispiel, Fig. 1a),bzw. auf die Außenseite der Ringscheibe 12 und den Ringscheibensegmenten 13a, 13b jeweils ein Reibbelagschichtsegment 18, 18a (im zweiten Ausführungsbeispiel, Fig. 1b) aufgeklebt. Die Ringscheibe, bzw. die Ringscheibensegmente bestehen vorzugsweise aus Leichtmetall wie Aluminium oder auch Kunststoff. Es ist jedoch auch möglich, die Ringscheiben insgesamt direkt aus Reibmaterial herzustellen, weil dieses Material im ausgehärteten Zustand ausreichende Festigkeit aufweist.

Die Klemmhülsen-/Klemmspangen-Belagkonstruktion nach Fig. 3 und 4 bewältigt die gleichen Aufgaben wie die Verriegelungselemente 14 nach Fig. 1b. Mit Hilfe der Klemmspangen 22, die am Innenumfang des Kupplungsbelagpaares oder des Kupplungsbelagträgerpaares 12, 13 zwischen die Schwalbenschwanznasen federnd geklemmt werden, werden diese beiden Ringscheibensegmente, zwischen denen dann auch die sogenannte Belagfederung 26 oder 16 sitzt, miteinander verspannt beziehungsweise am Auseinandergehen in axialer Richtung gehindert. Das Gleiche bewirken die sogenannten Klemmhülsen 21 an der Außenzone der Paarung, indem die Hülsen 21 über die zungenartigen Führungsstege 20, die das Gleiten des Belagpaares oder Trägerpaares in dem Durchbruch 19 im Grundkörper 7 bewirken, gestülpt werden. Prinzipiell ist jedoch ein Anbringen der Klemmhülsen beziehungsweise Klemmspangen auch in anderer Form denkbar.

Auch bei der Klemmhülsen-/Klemmspangen-Belagkonstruktion können die verschiedensten Belagfederungsarten, sogenannte "Federkissen", schubmomentenfrei montiert und belastet werden. So ist es zum Beispiel möglich, eine metallische Biegefeder 26 direkt mittels Stanz- und Biegetechnik in die sogenannten Klemmhülsen 22 und Klemmspangen 21 zu integrieren.

Selbstverständlich gilt auch für die Kupplungsscheiben, die mit Klemmhülsen 21 und 23 und mit Klemmspangen 22 und 24 verriegelt sind, das bereits bei den Verriegelungslaschen Gesagte. Natürlich kann dieses Verriegelungssystem auch direkt am Reibbelagsegmentenpaar beziehungsweise bei aufgeklebten Belägen direkt am Belagträgerpaarsegment eingesetzt werden.

Gemäß Fig. 2 wird erfindungsgemäß in einem weiteren Ausführungsbeispiel eine alternative Federung vorgeschlagen. Zwischen die Ringscheibensegmente 12 und 13 sind als Federelemente aus Silikon-Gummi oder einem anderen temperaturfesten Elastomer bestehende Schläuche 16 in dort vorgesehene ringförmige Vertiefungen 17 eingelegt, welche, wie Fig. 2 beispielhaft zeigt, einen rechteckigen beziehungsweise quadratischen, also auch kreisrunden oder ovalen Querschnitt aufweisen, während die Schläuche 16 im Querschnitt kreisförmig sind. Durch die unterschiedliche Querschnittsform von Ringnut und Schlauch läßt sich die Federkennung positiv beeinflussen. Auch läßt sich die Federkennung verändern beziehungsweise dem gewünschten Sollwert anpassen, wenn zum Beispiel die Verlegungsnuten nicht zentrische Kreisnuten sind, sondern durch eine andere Nutverteilung, zum Beispiel sinusförmig verlaufende Nutverteilung, vorgenommen wird.

## Patentansprüche

1. Kupplungsscheibe 1 für schaltbare Reibkupplungen mit aufeinander drückbaren Reibbelägen aus Reibmaterial, wobei wenigstens ein Belagring oder wenigstens ein Reibbelagträger 11 mit aufgebrachtem Reibbelag 18 bzw. zwei gegenseitig verriegel- oder verklemmbare Belagringe oder Reibbelagträger mit aufgebrachten Reibbelägen mittels einer Führung 15, 20 axial verschiebbar mit einem Kupplungsscheibengrundkörper 7 formschlüssig und drehfest mit diesem verbunden angeordnet ist oder sind,
**dadurch gekennzeichnet, dass**
die Führung 15, 20 außerhalb des oder der Belagringe oder außerhalb des oder der Reibbelagträger 11 vorgesehen ist.

2. Kupplungsscheibe gemäß Anspruch 1 **dadurch gekennzeichnet, dass** die Führung 15, 20 innerhalb des Kupplungsscheibengrundkörpers 7 vorgesehen ist.

3. Kupplungsscheibe gemäß Anspruch 1 oder 2 **dadurch gekennzeichnet, dass** der Kupplungsscheibengrundkörper 7 einen größeren Durchmesser als der oder die Belagringe oder der oder die Reibbelagträger 11 aufweist.

4. Kupplungsscheibe nach einem der vorherigen Ansprüche, **dadurch gekennzeichnet, dass** zur axialen Federung der Reibbeläge bzw. ihrer Träger (11) beispielsweise aus Kunststoff bestehende Schläuche (16) zwischen die Reibbeläge oder Träger (11) beim Verriegeln derselben eingeklemmt sind.

5. Kupplungsscheibe nach einem der vorherigen Ansprüche, **dadurch gekennzeichnet, dass** zur axialen Federung der Reibbeläge bzw. ihrer Träger (11) eine endlose metallische Biegefeder oder Torsionsfeder, die zwischen die Reibbeläge oder Träger (11) beim Verriegeln derselben eingeklemmt ist, vorgesehen ist.

6. Kupplungsscheibe nach einem der vorherigen Ansprüche, **dadurch gekennzeichnet, dass** mehrere gegenseitig verriegel- oder verklemmbare Belagringe oder Reibbelagträger 11 mit aufgebrachten Reibbelägen 18 bzw. ein oder mehrere Belagringe oder Reibbelagträger 11 mit aufgebrachten Reibbelägen 18 vorgesehen sind, die derart ineinander eingepaßt sind, dass beim Schalten der Kupplung diese nacheinander in Eingriff kommen.

7. Kupplungsscheibe nach einem der vorherigen Ansprüche, **dadurch gekennzeichnet, dass** der Belagring oder wenigstens ein Reibbelagträger 11 mit aufgebrachtem Reibbelag 18 bzw. zwei gegenseitig verriegel- oder verklemmbare Belagringe oder Reibbelagträger 11 mit aufgebrachten Reibbelägen 18 kreissegmentartig gefertigt sind.
